(19) Europäisches Patentamt
European Patent Office
Office européen des brevets

(11) **EP 3 251 190 B1**

## (12) FASCICULE DE BREVET EUROPEEN

(45) Date de publication et mention
de la délivrance du brevet:
**04.08.2021 Bulletin 2021/31**

(21) Numéro de dépôt: **16707842.7**

(22) Date de dépôt: **27.01.2016**

(51) Int Cl.:
*H02J 3/26* (2006.01)     *H01F 29/04* (2006.01)
*H02J 3/12* (2006.01)     *H02J 3/18* (2006.01)
*G05F 1/14* (2006.01)     *H02M 5/12* (2006.01)

(86) Numéro de dépôt international:
**PCT/FR2016/050170**

(87) Numéro de publication internationale:
**WO 2016/120563 (04.08.2016 Gazette 2016/31)**

(54) **DISPOSITIF DE RÉGLAGE DYNAMIQUE DE LA TENSION D'UN RÉSEAU ÉLECTRIQUE, ENSEMBLE ET RÉASEAU ÉLECTRIQUE COMPRENANT UN TEL DISPOSITIF**

VORRICHTUNG ZUR DYNAMISCHEN ANPASSUNG DER SPANNUNG EINES ELEKTRISCHEN NETZWERKS, ANORDNUNG UND ELEKTRISCHES NETZWERK MIT EINER DERARTIGEN VORRICHTUNG

DEVICE FOR DYNAMICALLY ADJUSTING THE VOLTAGE OF AN ELECTRICAL NETWORK, ASSEMBLY AND ELECTRICAL GRID COMPRISING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2015 FR 1550686**

(43) Date de publication de la demande:
**06.12.2017 Bulletin 2017/49**

(73) Titulaire: **TRANSFIX**
**83130 La Garde (FR)**

(72) Inventeurs:
• **FALTERMEIER, Jean-Françis**
**83210 Sollies-Toucas (FR)**
• **TRIFIGNY, Philippe**
**83210 Belgentier (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**CN-B- 101 615 806     FR-A1- 2 994 039**
**US-A- 6 087 738**

## Description

### Domaine technique

La présente invention se rapporte à un dispositif de réglage de la tension de réseaux électriques.

La présente invention se rapporte plus particulièrement à un dispositif de réglage dynamique de la tension qui est destiné à équiper des réseaux électriques comprenant un réseau électrique de première tension ayant un nombre de phases déterminé et un réseau électrique de seconde tension. De tels réseaux sont connectés entre eux par un transformateur de distribution permettant ainsi de modifier une tension U1 du réseau électrique de première tension.

### Etat de la technique

Un transformateur de distribution moyenne-tension / basse-tension utilisé sur les réseaux électriques de distribution publique de l'état de l'art antérieur est un transformateur abaisseur de tension généralement triphasé. La source d'alimentation est située en amont du réseau moyenne-tension, et les charges alimentées sont situées en aval du réseau basse-tension alimenté par ce même transformateur.

Selon la réglementation en vigueur (reprise par exemple par la norme européenne EN61000), la tension délivrée à ces charges doit respecter une tension contractuelle, de 400 V par exemple, dans une tolérance de +/- 10 %. Par ailleurs, la tolérance sur le réseau moyenne tension est également de +/- 10 %. Compte-tenu de ces exigences, il apparaît nécessaire de compenser les chutes de tension occasionnées par les impédances des réseaux moyenne et basse-tension, de même que par l'impédance du transformateur.

En outre, on assiste à un développement de plus en plus important de sources de production d'énergie décentralisées, par exemple des centrales photovoltaïques installées dans des habitations individuelles et plus particulièrement connectées aux réseaux de distribution publique basse-tension. Ces sources décentralisées fonctionnent de manière aléatoire au gré de conditions météorologiques. Il s'en suit que le flux d'énergie traversant le transformateur moyenne-tension / basse-tension, lequel alimente le réseau basse-tension auquel sont raccordées ces sources de production, peut transiter de la moyenne-tension vers la basse-tension, ou inversement, de la basse-tension vers la moyenne-tension. Il est alors nécessaire de compenser différemment la chute de tension interne du transformateur de distribution, de même que les chutes de tension dues aux réseaux, selon le sens du flux d'énergie et donc de manière dynamique.

Des dispositifs de réglage dynamique de la tension sont disponibles sur le marché. Un tel dispositif est décrit par exemple dans le document brevet FR 3 004 284. Ce dispositif est muni d'un transformateur de réglage comprenant, pour chaque phase du réseau de première tension triphasé, un enroulement secondaire connecté en série au réseau de première tension et un enroulement primaire dont un nombre variable de spires est connecté au réseau de seconde tension triphasé. Le transformateur de réglage comporte en outre un système de commande d'organes de commutation reliant les enroulements primaires au réseau de seconde tension. Toutefois, le réglage de la tension via un tel dispositif de réglage est un réglage symétrique, c'est-à-dire qu'il est effectué de manière identique, et simultanément, sur toutes les phases du réseau de tension.

Or, il s'avère que les réseaux électriques, et plus particulièrement les réseaux de distribution moyenne et basse tension, présentent fréquemment des tensions déséquilibrées liées à la présence intermittente de charges électriques ou de sources de production d'énergie décentralisées, monophasées ou polyphasées. Du fait de l'impédance des lignes moyennes ou basse tension, mais également de l'impédance interne des transformateurs, le déséquilibre entre les courants électriques des différentes phases se traduit par un déséquilibre de tension qui nuit au respect des tensions contractuelles dans les limites des tolérances autorisées. Or, un dispositif de réglage tel que décrit par exemple dans le document brevet FR 3 004 284 n'est pas prévu pour permettre un réglage agissant de manière indépendante sur toutes les phases du réseau électrique de seconde tension.

Par ailleurs, tel que proposé, ce dispositif est complexe en ce sens qu'il exige un nombre important de composants associés au transformateur de réglage, d'où un coût et un risque de défaillance élevés.

Le document CN 101 615 806 B divulgue un dispositif de compensation dynamique de puissance réactive à commande de phase. Le dispositif comprend un circuit de commande, un circuit de détection, un condensateur de compensation et un transformateur de compensation; dans lequel, un enroulement secondaire du transformateur de compensation est connecté à un bus après avoir été connecté avec un condensateur en série; les deux extrémités d'un enroulement primaire du transformateur de compensation sont respectivement connectées à différentes lignes de phase ou lignes nulles du bus à travers une pluralité de commutateurs. Ce dispositif est complexe, car il exige un nombre important de composants associés au transformateur de réglage, d'où un coût et un risque de défaillance élevés. De plus, cette solution permet seulement le réglage de la puissance réactive.

L'objectif visé par la présente invention est de fournir un dispositif de réglage de la tension capable de compenser les chutes ou les élévations de tension de manière dynamique et dissymétrique, c'est-à-dire permettant un mode de réglage agissant de manière indépendante sur toutes les phases du réseau électrique de seconde tension.

**Description de l'invention**

A cette fin, le dispositif de l'invention, par ailleurs conforme à la définition générique qu'en donne le préambule ci-dessus, est essentiellement tel qu'il comporte en outre un circuit électrique indépendant, ledit circuit électrique comprenant un organe de commutation et, pour la ou chaque phase du transformateur de réglage, un enroulement tertiaire positionné à proximité immédiate de l'enroulement secondaire associé à ladite phase, l'organe de commutation et le ou les enroulement(s) tertiaire(s) étant connectés en série, le circuit électrique indépendant se refermant sur un élément présentant une grandeur relative à une impédance.

Par « positionné à proximité immédiate », on entend que chaque enroulement tertiaire est couplé magnétiquement à un enroulement secondaire en veillant à ce que la réactance de fuite entre les deux enroulements soit la plus faible possible.

Grâce à la présence d'un enroulement tertiaire associé à un organe de commutation, un échange d'ampères-tours peut s'opérer entre l'enroulement secondaire et l'enroulement tertiaire associés à l'une des phases en cours de réglage, lorsque l'enroulement primaire associé à cette phase est ouvert. Ceci permet d'éviter l'apparition d'une impédance élevée aux bornes de l'enroulement secondaire et donc la génération d'un transitoire de courant et de tension préjudiciable au système pendant cette phase de commutation. Grâce à la présence de l'élément présentant une grandeur relative à une impédance, le courant électrique circulant au sein du circuit électrique indépendant est limité à une valeur non préjudiciable pour le système, qu'il y ait commutation en cours ou non. Par conséquent, le nombre de spires connectées au réseau électrique d'alimentation peut être réglé indépendamment pour chaque enroulement primaire, sans générer de courant préjudiciable pour le système, et autorisant ainsi une position permanente de réglage dissymétrique de la tension.

En outre, ce dispositif ne fait appel, avantageusement, qu'à un seul organe de commutation et à un seul élément présentant une grandeur relative à une impédance, communs à toutes les phases du dispositif. Ceci permet d'obtenir un dispositif plus fiable, moins coûteux et moins encombrant, comparé aux dispositifs de réglage dynamique de la tension conventionnels.

Ce dispositif est par ailleurs adapté aux contraintes d'exploitation propres aux réseaux de distribution moyenne-tension / basse-tension et n'occasionne pas de pertes énergétiques significatives, en comparaison à celles du transformateur de distribution auquel il est associé.

De préférence, le transformateur de réglage comporte un circuit magnétique comportant une jambe de retour permettant la circulation d'un flux homopolaire et, pour la ou chaque phase du transformateur de réglage, un noyau, les enroulements primaire, secondaire et tertiaire associés à ladite phase étant implantés concentriquement autour dudit noyau.

Ceci permet d'éviter que le flux homopolaire généré par un réglage dissymétrique des tensions ne se referme dans l'air, ce qui aurait pour effet d'induire des courants parasites dans des éléments conducteurs voisins du transformateur de réglage, et pourrait ainsi perturber ces éléments.

Selon une première variante de réalisation du dispositif de réglage, le réseau électrique de première tension étant polyphasé, le transformateur de réglage comporte autant d'enroulements tertiaires que le réseau de première tension comporte de phases.

Selon une particularité de cette première variante de réalisation, le circuit magnétique comporte une pluralité de noyaux, le nombre de noyaux étant égal au nombre de phases du réseau de première tension, chaque noyau recevant un enroulement primaire, un enroulement secondaire et un enroulement tertiaire associés à la même phase.

Selon une autre particularité de cette première variante de réalisation, le réseau de première tension est un réseau triphasé, le circuit magnétique comprenant trois noyaux et une jambe de retour, et les trois noyaux et la jambe de retour présentent des sections transversales sensiblement de mêmes dimensions.

Ceci permet à la jambe de retour de pouvoir avantageusement recevoir un flux de valeur égale à la somme des flux homopolaires circulant dans chaque noyau.

Selon une deuxième variante de réalisation du dispositif, le dispositif de réglage comporte autant de transformateurs de réglage monophasés que le réseau de première tension comporte de phases.

Selon un premier mode de réalisation du dispositif de réglage, l'élément comprend une résistance ou une inductance, connectée en série avec le ou les enroulement(s) tertiaire(s) et avec l'organe de commutation, au sein du circuit électrique.

Selon un deuxième mode de réalisation du dispositif de réglage, l'élément comporte un entrefer aménagé dans ladite jambe de retour, ledit entrefer créant une reluctance du circuit magnétique dont l'effet est identique à celui d'une impédance insérée dans le circuit électrique indépendant, la grandeur relative à une impédance étant une grandeur de valeur inversement proportionnelle à la reluctance du circuit magnétique parcouru par le flux homopolaire de chaque phase.

Ceci permet de réduire encore le coût et l'encombrement du dispositif de réglage.

Selon une caractéristique technique particulière, l'entrefer comprend une fente aménagée dans ladite jambe de retour, la fente étant comblée par un matériau isolant.

Selon une particularité du dispositif de réglage, l'organe de commutation comprend un contacteur mono stable normalement ouvert et un actionneur électrique de commande du contacteur.

Selon une particularité du dispositif de réglage, l'enroulement primaire comprend des prises aménagées sur son long de sorte que soit obtenue la variabilité du nombre de spires connectées au réseau électrique d'alimentation, les prises étant connectées ou déconnectées du réseau électrique d'alimentation au moyen d'éléments de commutation du dispositif de réglage, le système de commande étant adapté, pour chaque phase du réseau électrique de première tension, pour actionner les éléments de commutation relatifs à ladite phase indépendamment de ceux relatifs aux autres phases du réseau électrique de première tension.

Ceci permet d'alimenter électriquement l'enroulement primaire en partie ou en totalité, d'inverser les phases d'alimentation de l'enroulement primaire, ou de mettre ce dernier en court-circuit, indépendamment des éventuels autres enroulements primaires du transformateur de réglage.

De préférence, les éléments de commutation comprennent chacun un contacteur bipolaire et un actionneur électrique de commande du contacteur.

Cette caractéristique permet de simplifier le dispositif de réglage et d'améliorer sa fiabilité de fonctionnement en divisant le nombre de contacteurs par deux, comparativement à une solution qui ferait appel à des contacteurs unipolaires.

Selon une particularité du dispositif de réglage, l'organe de commutation et/ou les éléments de commutation comprennent chacun un contact auxiliaire permettant un retour d'information.

Grâce au retour d'information fourni par le ou chaque contact auxiliaire, la bonne exécution d'un ordre de commande émis par le système de commande peut être vérifiée. Ces retours d'information contribuent en outre à la sécurité du dispositif en cas d'anomalie.

Selon une autre particularité du dispositif de réglage, l'organe de commutation et/ou les éléments de commutation présentent chacun une durée de commutation inférieure à 100 ms.

Cette durée de commutation est en effet suffisamment courte pour maintenir les variations de tension transitoires résultant des commutations à des valeurs non préjudiciables pour les charges connectées au réseau de première tension.

Selon une particularité du dispositif de réglage, le réseau de seconde tension forme le réseau électrique d'alimentation.

Ceci permet de prélever la puissance électrique nécessaire directement sur le réseau de seconde tension, sans nécessiter le recours à un réseau auxiliaire d'alimentation électrique.

Selon une particularité du dispositif de réglage, pour la ou chaque phase du transformateur de réglage, l'enroulement tertiaire associé à cette phase est couplé magnétiquement à l'enroulement secondaire associé à cette phase.

Selon une autre particularité du dispositif de réglage, pour la ou chaque phase du transformateur de réglage, l'enroulement tertiaire associé à cette phase entoure l'enroulement primaire associé à cette phase, et l'enroulement secondaire associé à cette phase entoure les enroulements primaire et tertiaire associés à cette phase.

Selon une application particulière du dispositif de réglage, le réseau de première tension est un réseau moyenne-tension et le réseau de seconde tension est un réseau basse-tension, et le transformateur de distribution est un transformateur de distribution moyenne-tension / basse-tension.

Selon un autre aspect, l'invention concerne également un ensemble comprenant un transformateur de distribution connecté entre un réseau électrique de première tension et un réseau électrique de seconde tension, et un dispositif de réglage dynamique d'une tension du réseau de seconde tension, le transformateur de distribution étant muni d'une cuve à huile, le dispositif de réglage dynamique de la tension étant tel que décrit ci-dessus, le transformateur de réglage du dispositif de réglage étant intégré au sein de la cuve à huile du transformateur de distribution, l'organe de commutation et/ou les éléments de commutation étant accessibles directement hors de la cuve à huile.

L'encombrement d'un tel ensemble est ainsi avantageusement réduit, par comparaison à l'encombrement d'un ensemble comprenant un transformateur de distribution et un dispositif de réglage dynamique de la tension indépendants, reliés par une ou plusieurs liaison(s) électrique(s).

En variante, le dispositif de réglage peut être prévu dans sa propre cuve à huile, en restant ainsi physiquement indépendant du transformateur de distribution. Il est ainsi possible de l'intégrer dans un réseau de distribution existant sans qu'il soit nécessaire de l'installer à l'endroit où se trouve le transformateur de distribution, et sans qu'il soit nécessaire de changer le transformateur pour cette opération.

Selon un autre aspect, l'invention concerne également un réseau électrique de distribution comprenant un sous-réseau électrique de première tension ayant un nombre de phases déterminé et un sous-réseau électrique de seconde tension, les sous-réseaux de première et seconde tension étant connectés entre eux par un transformateur de distribution permettant de modifier une tension dudit sous-réseau électrique de première tension, le réseau électrique comprenant en outre un dispositif de réglage dynamique d'une tension du réseau de seconde tension, le dispositif de réglage dynamique de la tension étant tel que décrit ci-dessus.

D'autres avantages pourront encore apparaître à l'homme du métier à la lecture des exemples ci-dessous, illustrés par les figures annexées, donnés à titre illustratif.

## Brève description des figures

- La figure 1 représente un schéma électrique unifilaire d'un réseau de première tension, ayant une tension assignée U1, et un réseau de seconde tension, ayant une tension assignée U2, ces réseaux étant connectés entre eux par un transformateur de distribution et un dispositif de réglage dynamique de la tension selon la présente invention.
- La figure 2 représente un schéma électrique triphasé du dispositif de la figure 1 selon un premier mode de réalisation.
- Les figures 3 à 5 illustrent des étapes du fonctionnement du dispositif de la figure 2.
- La figure 6 représente un schéma électrique triphasé du dispositif de la figure 1 selon un deuxième mode de réalisation.

Dans la suite de la présente description, on entend par tension composée U la différence de potentiel entre deux conducteurs de phases différentes dans un système polyphasé.

On entend également par tension simple V associée à une phase d'un réseau électrique polyphasé la différence de potentiel entre cette phase et le neutre du réseau.

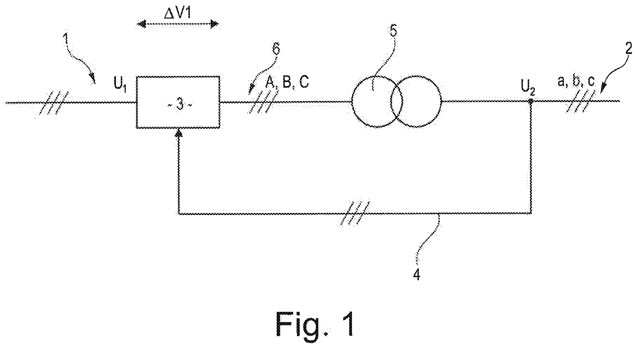

La figure 1 montre de manière unifilaire un système et un réseau de distribution électrique comprenant un réseau de première tension 1, ayant une tension assignée U1, et un réseau de seconde tension 2, ayant une tension assignée U2. Ces réseaux sont connectés entre eux au moins par un transformateur de distribution 5. Selon cette figure 1 et selon un mode de réalisation préféré, le transformateur de distribution 5 est raccordé au réseau de première tension 1 par l'intermédiaire d'un dispositif de réglage de tension 3. Ce dernier introduit entre son entrée et sa sortie une tension ΔV1 variable et choisie. Entre le dispositif 3 et le transformateur de distribution 5 est située une première liaison électrique 6.

Ceci dit, une autre configuration est possible selon laquelle le dispositif de réglage 3 est situé entre le transformateur de distribution 5 et le réseau de seconde tension 2. Dans ce second cas, le dispositif ne comporte que des éléments soumis à une basse tension. Mais par contre, les intensités transitées sont élevées. Selon les caractéristiques de tension et de puissance de l'installation, et selon le fait que le dispositif est intégré ou associé au transformateur, l'une de ces deux solutions peut s'avérer plus économique.

Par ailleurs, le dispositif de réglage 3 prélève la puissance électrique nécessaire au niveau d'un réseau électrique d'alimentation. Dans l'exemple de réalisation préférentiel illustré sur la figure 1, le réseau de seconde tension 2 forme le réseau électrique d'alimentation et le dispositif de réglage 3 prélève la puissance électrique nécessaire au niveau des sorties du transformateur de distribution 5 connectées au réseau de seconde tension 2 par l'intermédiaire d'une seconde liaison électrique 4. En variante non représentée, un réseau auxiliaire de troisième tension forme le réseau électrique d'alimentation et la seconde liaison électrique 4 connecte le dispositif de réglage 3 au réseau auxiliaire de troisième tension.

Au vu de la destination du dispositif de réglage 3, destination relative à la distribution publique d'énergie électrique, les réseaux 1 et 2 sont respectivement des réseaux moyenne et basse-tension. Toutefois ces réseaux peuvent avoir une autre destination que celle de la distribution publique d'énergie électrique. Leur tension respective peut se situer dans un domaine autre que ceux de la moyenne-tension ou de la basse-tension. De même, bien que la figure 1 présente à titre d'exemple le schéma unifilaire d'un système triphasé, le principe évoqué ici s'applique à des réseaux dont le nombre de phases peut être différent.

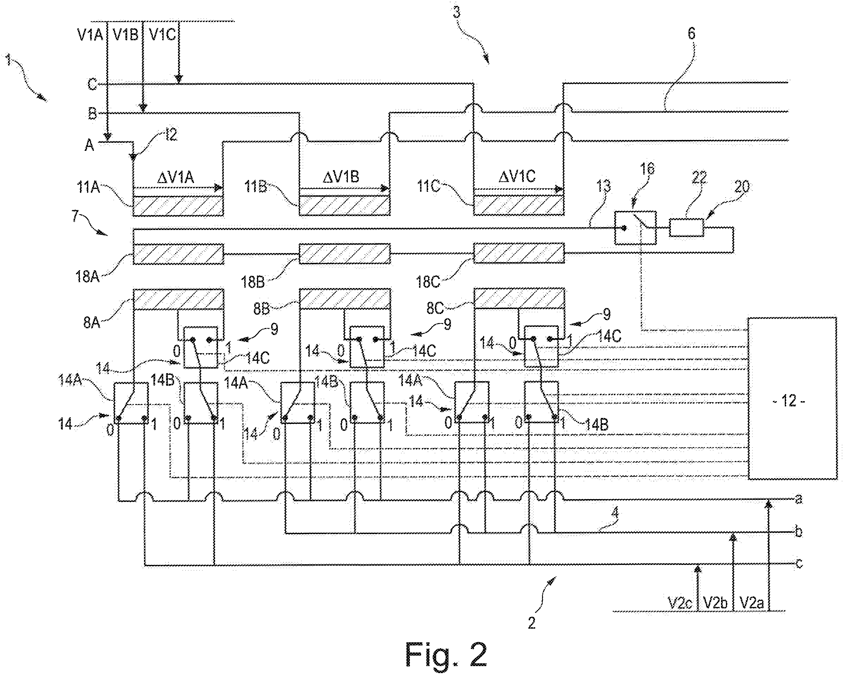

La figure 2 présente le schéma électrique triphasé du dispositif de réglage 3 selon un premier mode de réalisation. Le dispositif de réglage 3 comprend un transformateur de réglage 7. Dans ce premier mode de réalisation, selon l'exemple illustré sur la figure 2, le transformateur de réglage 7 présente un nombre de phases identique à celui du réseau de première tension 1. En variante non représentée, le dispositif de réglage 3 comporte autant de transformateurs de réglage monophasés que le réseau de première tension 1 comporte de phases.

Le transformateur de réglage 7 comporte, pour au moins une des phases du réseau de première tension 1, un enroulement primaire 8A, 8B, 8C et un enroulement secondaire 11A, 11B, 11C. Dans l'exemple de réalisation particulier de la figure 2, le transformateur de réglage 7 comporte, pour chaque phase du réseau de première tension 1, un enroulement primaire 8A, 8B, 8C et un enroulement secondaire 11A, 11B, 11C. Le transformateur de réglage 7 comporte en outre un système de commande 12 et un circuit électrique indépendant 13. De préférence, le ou chaque transformateur de réglage 7 comporte en outre un circuit magnétique sur lequel est enroulé au moins un enroulement primaire 8A, 8B, 8C et au moins un enroulement secondaire 11A, 11B, 11C ; un tel circuit magnétique n'étant pas représenté sur la figure 2 pour des raisons de clarté.

Le circuit magnétique comporte par exemple une jambe de retour permettant la circulation d'un flux homopolaire et, pour la ou chaque phase du transformateur de réglage 7, un noyau. Par « noyau » on entend une colonne d'un circuit magnétique. Dans l'exemple de réalisation particulier de la figure 2, le circuit magnétique comporte un nombre de noyaux égal au nombre de phases du réseau de première tension 1. Selon cet exemple de réalisation particulier, pour chaque phase du réseau de première tension 1, un enroulement primaire 8A, 8B, 8C et un enroulement secondaire 11A, 11B, 11C associé sont implantés concentriquement sur un des noyaux du circuit magnétique, lequel noyau est associé à cette phase. Dans la variante selon laquelle le dispositif de réglage 3 comporte autant de transformateurs de réglage monophasés que le réseau de première tension 1 comporte de phases, le ou chaque circuit magnétique comporte un noyau et une jambe de retour. Selon cette variante, pour le ou chaque circuit magnétique « monophasé », un enroulement primaire et un enroulement secondaire associé sont enroulés sur le noyau du circuit magnétique.

Chaque enroulement primaire 8A, 8B, 8C du transformateur de réglage 7 est couplé magnétiquement à un enroulement secondaire 11A, 11B, 11C de ce transformateur. Chaque enroulement primaire 8A, 8B, 8C du transformateur de réglage 7 est connecté au réseau électrique d'alimentation, un nombre variable de spires de chaque enroulement primaire 8A, 8B, 8C étant connecté à ce réseau d'alimentation de manière à obtenir aux bornes de l'enroulement secondaire 11A, 11B, 11C associé une tension $\Delta V1A$, $\Delta V1B$, $\Delta V1C$ choisie. Dans l'exemple de réalisation des figures 1 et 2 où le réseau de seconde tension 2 forme le réseau électrique d'alimentation, chaque enroulement primaire 8A, 8B, 8C est connecté au réseau de seconde tension 2 par l'intermédiaire d'une partie de la seconde liaison électrique 4 constituée de deux des phases du réseau de seconde tension 2, ces phases étant choisies pour que la tension $\Delta V1A$, $\Delta V1B$, $\Delta V1C$ choisie soit colinéaire à une tension simple V1A, V1B, V1C à laquelle elle s'additionne. Plus précisément, pour chaque phase du système triphasé, la tension $\Delta V1A$, $\Delta V1B$, $\Delta V1C$ associée à cette phase vient s'additionner à une tension simple V1A, V1B, V1C du réseau de première tension 1 associée à cette phase, pour régler une tension simple V2a, V2b, V2c du réseau de seconde tension 2 associée à cette même phase. Chaque tension $\Delta V1A$, $\Delta V1B$, $\Delta V1C$ est préférentiellement choisie de sorte à corriger un déséquilibre de tension apparaissant entre les tensions simples V2a, V2b, V2c du réseau de seconde tension 2, comme cela sera détaillé par la suite. Dans l'exemple de réalisation préférentiel illustré sur la figure 2, chaque enroulement primaire 8A, 8B, 8C comporte des prises de réglage 9 aménagées sur son long et séparées entre elles par un nombre défini de spires. Les prises de réglage 9 sont aménagées de sorte à obtenir la variabilité du nombre de spires connectées au réseau de seconde tension 2, et sont susceptibles d'être connectées ou déconnectées du réseau de seconde tension 2 au moyen d'éléments de commutation 14.

Le dispositif de réglage 3 comprend typiquement, pour chaque enroulement primaire 8A, 8B, 8C, trois interrupteurs de commutation 14A, 14B, 14C, agencés et connectés selon l'exemple illustratif de la figure 2. Les trois interrupteurs de commutation 14A, 14B, 14C associés à un enroulement primaire 8A, 8B, 8C donné sont associés à la phase A, B, C correspondante. Chaque interrupteur de commutation 14A, 14B, 14C comprend par exemple un contacteur bipolaire et un actionneur électrique de commande du contacteur, typiquement un solénoïde de commande. Le principe de fonctionnement de tels interrupteurs de commutation 14A, 14B, 14C est par exemple décrit à la page 10, lignes 13 à 26 du document brevet FR 2 994 039 A1. En variante, les éléments de commutation 14 sont des organes de commutation à base de semi-conducteurs de puissance tels que des thyristors. En variante encore, les éléments de commutation 14 sont des contacteurs unipolaires monophasés. En variante encore, les éléments de commutation 14 sont agencés et connectés, pour chaque enroulement primaire 8A, 8B, 8C, selon l'exemple de la figure 2 du document brevet FR 2 994 039 A1, et fonctionnent conformément à ce qui est décrit à la page 9, lignes 5 à 11 et lignes 15 à 27 de ce document brevet.

De préférence, chaque élément de commutation 14 comprend en outre un contact auxiliaire permettant un retour d'informations.

De préférence encore, chaque élément de commutation 14 présente une durée de commutation inférieure à 100 ms, la durée de commutation étant définie comme la somme de la durée de basculement de l'élément de commutation 14 d'une position à une autre, et du délai nécessaire pour obtenir l'interruption du courant électrique.

Dans l'exemple illustratif de la figure 2, le nombre de positions de réglage pour chaque phase du dispositif est égal à 5, offrant par exemple une plage de réglage de 10% se répartissant, selon l'inversion ou non des phases alimentant chaque enroulement primaire 8A, 8B, 8C, en cinq positions -5%, -2,5%, 0, +2,5%, +5%. En variante, le pas entre les positions de réglage peut être choisi différemment. En variante encore, le nombre de positions de réglage souhaité pour chaque phase du dispositif 3 peut être choisi de sorte à être différent de cinq. Il est à noter que, si la plage de réglage dépasse les 15%, il pourra être préférable de prévoir deux dispositifs de réglage 3 placés en série sur le réseau de première tension 1. En effet, une plage de réglage trop étendue autorise une dissymétrie de réglage qui, si elle s'appliquait à un dispositif unique, conduirait à un courant de circulation dans le circuit électrique 13 trop élevé pour permettre un dimensionnement économique.

Chaque enroulement secondaire 11A, 11B, 11C du transformateur de réglage 7 est connecté en série entre le réseau de première tension 1 et une partie de la première liaison électrique 6 constituée d'une des phases de cette liaison électrique 6.

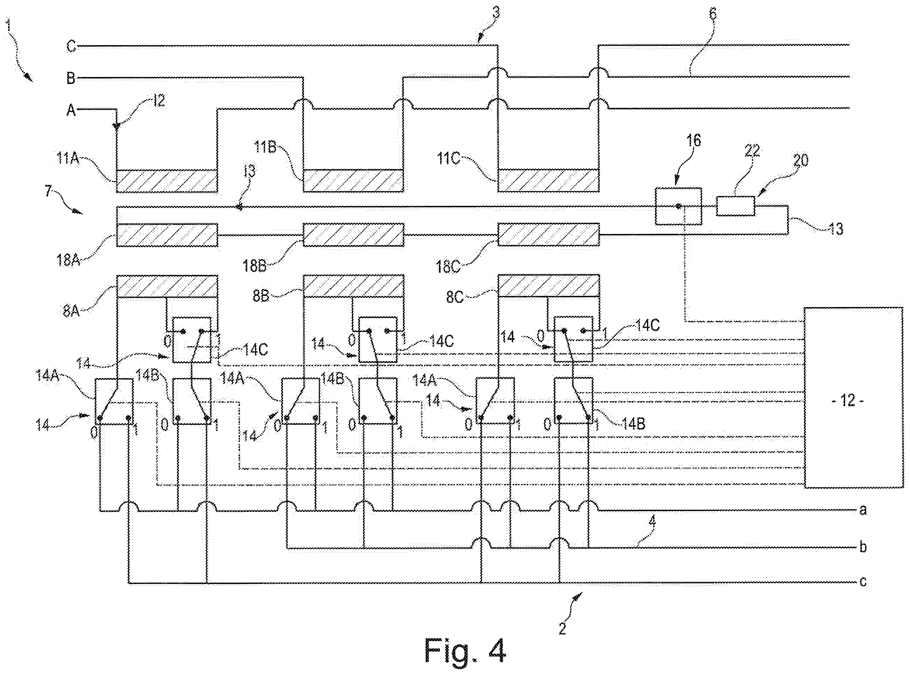

Dans l'exemple illustratif de la figure 2, le système de commande 12 est adapté, pour chaque phase du réseau de première tension 1, pour actionner les interrupteurs de commutation 14A, 14B, 14C relatifs à ladite phase indépendamment de ceux relatifs aux autres phases. Plus précisément, le système de commande 12 est adapté, pour chaque enroulement primaire 8A, 8B, 8C, pour actionner les interrupteurs de commutation 14A, 14B, 14C associés à cet enroulement primaire 8A, 8B, 8C indépendamment de ceux associés aux autres enroulements primaires 8A, 8B, 8C. Le système de commande 12 comprend par exemple une mémoire stockant une table de vérité telle qu'illustrée sur la figure 4a du document brevet FR 2 994 039 A1. Cette table de vérité contient le choix et l'ordre de basculement des interrupteurs de commutation 14A, 14B, 14C relatifs à chaque phase du réseau de première tension 1, pour permettre le réglage de la tension $\Delta V1A$, $\Delta V1B$, $\Delta V1C$ associée à cette phase, indépendamment des tensions $\Delta V1A$, $\Delta V1B$, $\Delta V1C$ associées aux autres phases. Le choix de la position des interrupteurs de commutation 14A, 14B, 14C résulte d'une information qui peut être d'origine externe au dispositif, en provenance d'un dispositif d'échange d'information avec un gestionnaire du réseau, ou éventuellement interne. Dans ce second cas, différents critères peuvent être utilisés dont, par exemple, la mesure des tensions simples V2a, V2b, V2c du réseau de seconde tension 2, prises directement en aval du transformateur de distribution 5. En variante ou en complément, d'autres critères peuvent être utilisés tels que les tensions composées du réseau de première tension 1, relevées entre les phases constituant la première liaison électrique 6, ou encore les tensions composées relevées entre les phases du réseau de seconde tension 2 associées aux courants débités dans les différentes phases de ce même réseau de seconde tension 2.

Le circuit électrique indépendant 13 comprend un organe de commutation 16 et, pour la ou chaque phase du transformateur de réglage 7, un enroulement tertiaire 18A, 18B, 18C positionné à proximité immédiate de l'enroulement secondaire 11A, 11B, 11C associé à cette phase, en veillant à ce que la réactance de fuite entre les deux enroulements soit la plus faible possible. Chaque enroulement tertiaire 18A, 18B, 18C est couplé magnétiquement à un enroulement secondaire 11A, 11B, 11C. Le circuit électrique indépendant 13 se referme sur un élément 20 présentant une grandeur relative à une impédance. Dans l'exemple de réalisation particulier de la figure 2, le transformateur de réglage 7 comporte, pour chaque phase du réseau de première tension 1, un enroulement tertiaire 18A, 18B, 18C positionné à proximité immédiate de l'enroulement secondaire 11A, 11B, 11C associé à cette phase.

Dans le mode de réalisation préférentiel selon lequel le ou chaque transformateur de réglage 7 comporte en outre un circuit magnétique, au moins un enroulement tertiaire 18A, 18B, 18C est enroulé sur le circuit magnétique. Dans l'exemple de réalisation particulier de la figure 2, chaque noyau du circuit magnétique reçoit un enroulement primaire 8A, 8B, 8C, un enroulement secondaire 11A, 11B, 11C et un enroulement tertiaire 18A, 18B, 18C associés à la même phase. Dans la variante selon laquelle le dispositif de réglage 3 comporte autant de transformateurs de réglage monophasés que le réseau de première tension 1 comporte de phases, pour le ou chaque circuit magnétique « monophasé », le noyau du circuit magnétique reçoit un enroulement primaire, un enroulement secondaire et un enroulement tertiaire.

De préférence, chaque enroulement tertiaire 18A, 18B, 18C associé à une des phases du réseau de première tension 1 est agencé de manière concentrique par rapport à l'enroulement primaire 8A, 8B, 8C et à l'enroulement secondaire 11A, 11B, 11C associés à cette phase, selon l'ordre suivant: enroulement primaire 8A, 8B, 8C, puis enroulement tertiaire associé 18A, 18B, 18C entourant l'enroulement primaire, puis enroulement secondaire associé 11A, 11B, 11C entourant les enroulements primaire et tertiaires. Cette configuration permet d'améliorer le couplage électromagnétique entre chaque enroulement tertiaire d'une part et les enroulements primaire et secondaire associés d'autre part.

L'organe de commutation 16 et les enroulements tertiaires 18A, 18B, 18C sont connectés en série, comme représenté sur la figure 2.

Le système de commande 12 est apte à commander l'ouverture ou la fermeture de l'organe de commutation 16. L'organe de commutation 16 comprend par exemple un contacteur mono stable normalement ouvert et un actionneur électrique de commande du contacteur, typiquement un solénoïde de commande. Dans ce cas, le système de commande 12 est apte à piloter l'actionneur électrique pour commander l'ouverture ou la fermeture du contacteur mono stable.

De préférence, l'organe de commutation 16 comprend en outre un contact auxiliaire permettant un retour d'informations.

De préférence encore, l'organe de commutation 16 présente une durée de commutation inférieure à 100 ms. Dans le premier mode de réalisation du dispositif de réglage 3 illustré sur la figure 2, l'élément 20 comprend une résistance 22. La résistance 22 est connectée en série avec les enroulements tertiaires 18A, 18B, 18C et avec l'organe de commutation 16, au sein du circuit électrique 13. La présence d'une résistance permet d'éviter l'introduction d'un déphasage entre la tension et l'intensité du courant électrique circulant dans le circuit 13, un tel déphasage pouvant nuire à l'organe de commutation 16.

En variante non représentée, l'élément 20 comprend une inductance connectée en série avec les enroulements tertiaires 18A, 18B, 18C et avec l'organe de commutation 16. La présence d'une inductance permet d'éviter une consommation de puissance électrique active au sein du dispositif. Le choix entre une résistance et une inductance pour l'élément 20 dépendra donc des caractéristiques attendues du dispositif de réglage 3 et du meilleur compromis possible entre puissance consommée et surtension générée.

Le fonctionnement du dispositif de réglage 3 selon l'invention va maintenant être décrit en référence aux figures 2 à 5. Plus précisément, un procédé de réglage dynamique de la tension ΔV1A aux bornes de l'enroulement secondaire 11A va maintenant être décrit en regard de ces figures.

Initialement, chaque phase du dispositif de réglage 3 est positionnée sur la position +5%, comme illustré par la position des éléments de commutation 14 associés à chaque phase sur la figure 2. Plus précisément, dans cette position initiale, tous les interrupteurs 14A, 14C sont sur leur position 0, et tous les interrupteurs 14B sont sur leur position 1. On suppose que, l'état des tensions des premier et second réseaux 1, 2 évoluant, on souhaite ramener la phase A à la position +2,5%. On suppose en outre qu'un courant électrique I2 circule au sein de l'enroulement secondaire 11A associé à la phase A du réseau de première tension 1.

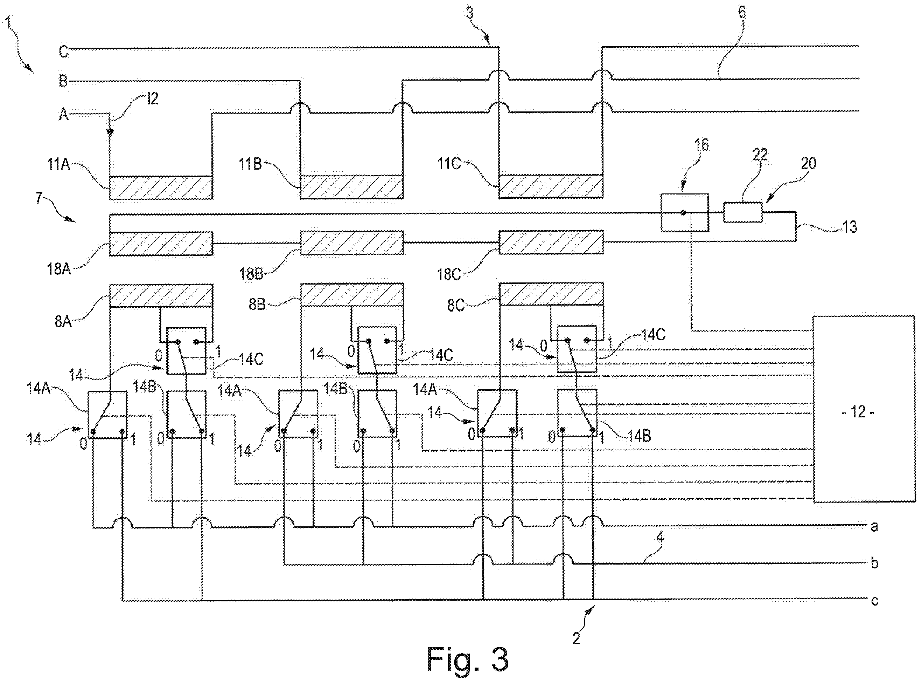

Au cours d'une première étape, le système 12 émet un signal de commande de fermeture de l'organe de commutation 16. L'organe de commutation 16 se ferme alors, comme illustré sur la figure 3.

Lorsque l'organe de commutation 16 est fermé, aucun courant électrique n'apparait au sein du circuit électrique 13, les réglages étant identiques pour les trois phases du dispositif à ce stade du procédé.

Au cours d'une étape suivante, le système 12, après consultation de la table de vérité stockée dans sa mémoire, émet un signal de commande de basculement de l'interrupteur de commutation 14C associé à la phase A. L'interrupteur de commutation 14C associé à la phase A quitte alors la position 0 pour rejoindre la position 1, comme illustré sur la figure 4. Pendant le laps de temps du basculement, l'enroulement primaire 8A associé à la phase A est ouvert. Les ampères-tours produits par l'enroulement secondaire 11A associé à la phase A, du fait du courant électrique I2, se reportent sur l'enroulement tertiaire 18A associé. Compte-tenu du rapport du nombre de spires entre l'enroulement secondaire 11A et l'enroulement tertiaire 18A associé, un courant électrique I3 parcourt cet enroulement tertiaire 18A. Le courant électrique I3 présente alors une valeur égale à celle du courant électrique I2 multipliée par le rapport du nombre de spires entre l'enroulement secondaire 11A et l'enroulement tertiaire 18A associé. Le dispositif 3 se comporte ainsi en transformateur de courant. Ce courant électrique I3 circule également dans les autres enroulements tertiaires 18B, 18C et génère aux bornes de l'élément 20 une tension qui s'additionne vectoriellement aux tensions aux bornes des enroulements tertiaires 18B, 18C associés aux phases B et C. La résultante de ces trois tensions est compensée par une tension apparaissant aux bornes de l'enroulement tertiaire 18A associé à la phase A et se reportant à l'enroulement primaire 8A associé à cette même phase, au prorata du rapport des nombres de spires respectifs. Les valeurs des tensions respectives aux bornes des enroulements primaire 8A, secondaire 11A et tertiaire 18A associés à la phase A restent limitées et ne sont pas préjudiciables pour le dispositif de réglage 3, ni pour le réseau de première tension 1 et les récepteurs qui y sont connectés.

Sans la présence de ces enroulements tertiaires 18A, 18B, 18C, et du circuit électrique 13 se refermant sur un élément 20 présentant une grandeur relative à une impédance, le courant I2 parcourant l'enroulement secondaire 11A associé à la phase A aurait été compensé par des ampères-tours magnétisants provoquant aux bornes de l'enroulement primaire 8A associé à cette même phase une surtension rédhibitoire, phénomène connu par l'homme de l'art, et correspondant au cas d'un transformateur de courant parcouru par un courant primaire et dont le secondaire est ouvert. Ainsi, l'enroulement tertiaire 18A associé à la phase en cours de commutation joue un rôle de stabilisation en se substituant à l'enroulement primaire 8A pendant le délai durant lequel celui-ci se retrouve en situation ouverte. L'enroulement tertiaire 18A fournit ainsi les ampères-tours nécessaires pour une compensation du courant I2 parcourant l'enroulement secondaire 11A. Ces ampères-tours sont prélevés sur les autres phases sur lesquelles aucune commutation n'est en cours.

L'interrupteur de commutation 14C associé à la phase A ayant rejoint la position 1, les ampères-tours produits par l'enroulement secondaire 11A associé à cette même phase du fait du courant I2 se reportent à présent sur l'enroulement primaire 8A associé à cette même phase. Le dispositif 3 se comporte ainsi en transformateur de tension, et la phase A est à présent réglée à la position +2,5 %. Grâce à l'élément 20 présentant une grandeur relative à une impédance, le courant électrique I3 circulant au sein du circuit électrique 13 est limité à une valeur non préjudiciable pour le dispositif, qu'il y ait commutation en cours ou non. Un tel réglage dissymétrique des phases A, B, C du dispositif 3 est ainsi rendu possible, car malgré les valeurs de tensions différentes aux bornes des enroulements tertiaires 18A, 18B, 18C, le courant I3 reste limité à des valeurs supportables pendant une certaine durée par le dispositif. La somme des flux circulant dans chaque noyau du circuit magnétique étant non nulle du fait de la dissymétrie de réglage, des flux homopolaires sont générés, nécessitant une jambe de retour pour se reboucler. Dans le cas de circuits monophasés, ce phénomène n'est pas à prendre en compte.

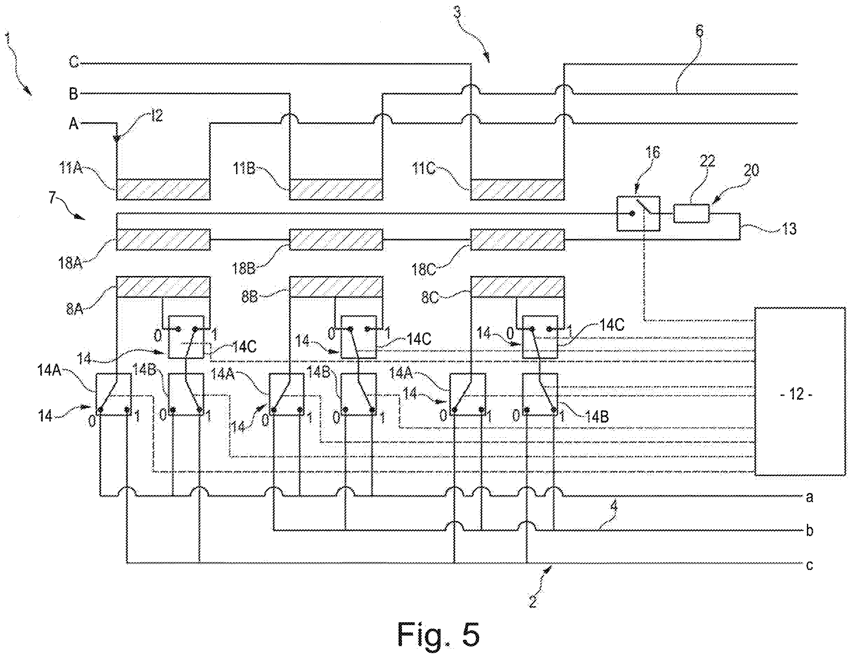

Au cours d'une étape finale, le système 12 émet un signal de commande d'ouverture de l'organe de commutation 16. Le contacteur de l'organe de commutation 16 reprend alors sa position normalement ouverte, comme illustré sur la figure 5. La nécessité d'interrompre le courant I3 s'explique de la manière suivante : d'une part, si celui-ci était maintenu, les enroulements tertiaires 18A, 18B, 18C et la résistance 22 seraient soumis sur la durée à une charge permanente et à des échauffements rédhibitoires. D'autre part, ce courant I3 se reporterait inutilement sur les enroulements primaires 8A, 8B, 8C et sur les éléments de commutation 14.

Dans l'exemple de réalisation préférentiel selon lequel les éléments de commutation 14 et l'organe de commutation 16 présentent chacun une durée de commutation inférieure à 100 ms, la durée du cycle de réglage décrit ci-dessus ne dépasse pas 300ms. Cette durée est tout à fait compatible avec l'application du dispositif de réglage 3 relative à la distribution publique d'énergie électrique. Cette durée peut avoir une valeur différente, selon la rapidité des contacteurs utilisés.

En cas de non basculement de l'organe de commutation 16 ou de l'un des interrupteurs de commutation 14A, 14B, 14C, le dispositif se fige dans la position précédant l'ordre de commande émis par le système de commande 12. Une alarme peut être diffusée vers l'exploitant du réseau. La distribution de l'énergie reste possible dans un mode dégradé mais tolérable sur une courte période de temps, nécessaire à une intervention de maintenance. De même, le refus de l'ouverture de l'organe de commutation 16 provoque un ordre d'équilibrage des phases, de sorte à ce qu'aucun courant ne continue à parcourir les enroulements tertiaires 18A, 18B, 18C et la résistance 22.

Enfin, en cas d'une disparition accidentelle de la tension du réseau électrique d'alimentation, les interrupteurs de commutation 14A, 14B, 14C, qui sont des contacteurs monostables, rejoignent ou se figent dans leur position de repos. Le schéma de raccordement de ces contacteurs est ainsi choisi pour que, dans cette situation, les trois enroulements primaires 8A, 8B, 8C soient court-circuités, ce qui correspond à la position de réglage 0 de tous les interrupteurs 14A, 14B, 14C.

On a décrit le procédé de réglage dynamique de la tension selon l'invention par référence au cas où on souhaite ramener la phase A à la position +2,5%, par réglage de la tension ΔV1A. Plus généralement, si l'on souhaite corriger les tensions simples V2a, V2b, V2c de sorte que leur valeur soit ramenée à une valeur de consigne Vc, une telle valeur de consigne Vc étant située dans la plage de tolérance de la tension contractuelle du réseau de seconde tension 2, les valeurs des tensions ΔV1A, ΔV1B, ΔV1C exprimées en pourcentage des valeurs V1A, V1B, V1C doivent être choisies de sorte à respecter les formules suivantes :

$$(1) \quad \Delta V1A = (V2b - V2a - V2c + Vc) / Vc.100 \ ;$$

$$(2) \quad \Delta V1B = (V2c - V2a - V2b + Vc) / Vc.100 \ ;$$

$$(3) \quad \Delta V1C = (V2a - V2b - V2c + Vc) / Vc.100$$

Dans ces formules (1), (2), (3), on considère par hypothèse que les déphasages résultant des éventuelles dissymétries de tensions restent négligeables, dans la mesure où ceux-ci interviennent au second ordre.

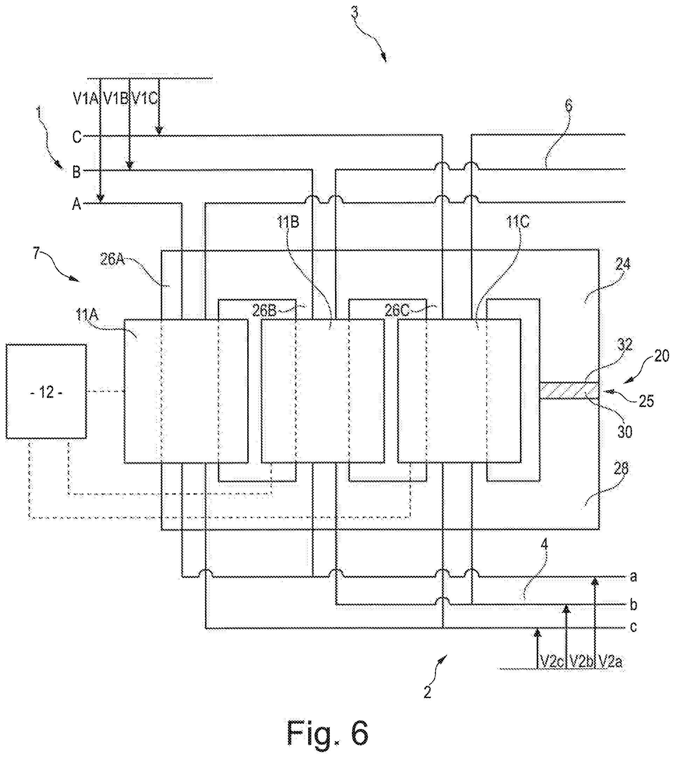

La figure 6 présente le schéma électrique triphasé du dispositif de réglage 3 selon un deuxième mode de réalisation, pour lequel les éléments analogues au premier mode de réalisation, décrit précédemment en regard des figures 2 à 5, sont repérés par des références identiques, et ne sont donc pas décrits à nouveau. Bien que les éléments de commutation 14 et l'organe de commutation 16 ne soient pas représentés sur la figure 6 pour des raisons de clarté, la structure et l'agencement de ces organes sont identiques à ceux du dispositif 3 selon le premier mode de réalisation. En outre, le circuit magnétique est représenté sur la figure 6 par la référence numérique 24.

Selon ce deuxième mode de réalisation, le transformateur de réglage 7 présente un nombre de phases identique à celui du réseau de première tension 1.

Selon ce deuxième mode de réalisation, l'élément 20 présentant une grandeur relative à une impédance ne comporte plus de résistance 22 ou d'inductance, mais comporte un entrefer 25.

Le circuit magnétique 24 comprend plusieurs noyaux 26A, 26B, 26C, et une jambe de retour 28. Le nombre de noyaux 26A, 26B, 26C est égal au nombre de phases du réseau de première tension 1. Dans l'exemple de réalisation particulier de la figure 6 selon lequel le réseau de première tension 1 est un réseau triphasé, le circuit magnétique 24 comprend trois noyaux 26A, 26B, 26C.

Chaque noyau 26A, 26B, 26C reçoit un enroulement primaire 8A, 8B, 8C, un enroulement secondaire 11A, 11B, 11C et un enroulement tertiaire 18A, 18B, 18C associés à la même phase. De préférence, comme évoqué précédemment, l'agencement entre les enroulements primaire 8A, 8B, 8C, secondaire 11A, 11B, 11C et tertiaire 18A, 18B, 18C associés à une même phase est concentrique : l'enroulement primaire 8A, 8B, 8C entoure un des noyaux 26A, 26B, 26C, l'enroulement tertiaire associé 18A, 18B, 18C entoure l'enroulement primaire 8A, 8B, 8C, et l'enroulement secondaire associé 11A, 11B, 11C entoure les enroulements primaire 8A, 8B, 8C et tertiaire 18A, 18B, 18C.

La jambe de retour 28 permet la circulation d'un flux homopolaire au sein du circuit magnétique 24. La jambe de retour 28 permet ainsi de canaliser un tel flux homopolaire, généré du fait de la dissymétrie des flux passant dans chaque noyau 26A, 26B, 26C provoquée par un réglage dissymétrique des tensions.

Dans l'exemple de réalisation préférentiel illustré sur la figure 6, les trois noyaux 26A, 26B, 26C et la jambe de retour 28 présentent des sections transversales sensiblement de mêmes dimensions.

En variante non représentée, les trois noyaux 26A, 26B, 26C présentent des sections transversales sensiblement de mêmes dimensions, et la jambe de retour 28 présente une section transversale de dimensions différentes de celles des sections transversales des trois noyaux 26A, 26B, 26C. Le choix des dimensions de la section transversale de la jambe de retour 28 peut être effectué en fonction du déséquilibre de réglage maximal qu'on souhaite autoriser entre les phases du dispositif 3. La jambe de retour 28 peut par exemple présenter une section transversale de valeur double de celles des sections transversales des trois noyaux 26A, 26B, 26C.

L'entrefer 25 est aménagé dans la jambe de retour 28. L'entrefer 25 créée une reluctance du circuit magnétique 24 dont l'effet est identique à celui d'une impédance insérée dans le circuit électrique indépendant. Selon ce deuxième mode de réalisation de l'invention, la grandeur relative à une impédance de l'élément 20 est une grandeur de valeur inversement proportionnelle à la reluctance du circuit magnétique 24 parcouru par le flux homopolaire de chaque phase.

De préférence, comme illustré sur la figure 6, l'entrefer 25 comprend une fente 30 aménagée dans la jambe de retour 28. La fente 30 est comblée par un matériau isolant 32, par exemple un carton imprégné de résine phénolique. La fente 30 présente une épaisseur par exemple de l'ordre de quelques millimètres, liée à la reluctance souhaitée pour le circuit magnétique 24.

Le fonctionnement du dispositif selon le second mode de réalisation illustré sur la figure 6 étant similaire à celui du dispositif selon le premier mode de réalisation illustré sur les figures 2 à 5, celui-ci ne sera pas décrit plus en détail.

Comme évoqué précédemment, chaque enroulement secondaire 11A, 11B, 11C du dispositif de réglage 3 peut être inséré entre le transformateur de distribution 5 et le réseau de première tension 1 ou entre le transformateur de distribution 5 et le réseau de seconde tension 2. Le choix peut dépendre de la puissance du transformateur de distribution 5, donc des intensités transitées, mais également des tensions respectives des réseaux 1 et 2. Selon ces caractéristiques et selon la technologie retenue pour réaliser le transformateur de réglage 7 inclus dans le dispositif de réglage 3, l'une des deux options peut s'avérer plus économique.

Tel que décrit, le dispositif de réglage 3 peut être prévu dans sa propre enveloppe, en restant ainsi physiquement indépendant du transformateur de distribution 5. Il est ainsi possible de l'intégrer dans un réseau de distribution existant sans qu'il soit nécessaire de l'installer à l'endroit où se trouve le transformateur de distribution 5, et sans qu'il soit nécessaire de changer le transformateur 5 pour cette opération.

Dans une autre variante qui peut être également avantageuse, le transformateur de réglage 7 du dispositif de réglage 3 est intégré directement dans l'enveloppe du transformateur de distribution 5. Plus précisément, si le transformateur de distribution 5 est muni d'une cuve à huile, le transformateur de réglage 7 est intégré au sein de la cuve à huile, l'organe de commutation 16 et/ou les éléments de commutation 14 étant accessibles directement hors de la cuve à huile. Il s'en suit l'économie de la seconde liaison électrique 4 moyenne-tension et des interfaces de raccordement qui lui sont associés. On obtient ainsi un ensemble dont l'encombrement est inférieur à celui résultant de l'association des deux appareils distincts.

## Revendications

1. Dispositif (3) de réglage dynamique de la tension destiné à équiper des réseaux électriques comprenant un réseau électrique de première tension (1) ayant un nombre de phases déterminé et un réseau électrique de seconde tension (2), les réseaux de première (1) et seconde tension (2) étant connectés entre eux par un transformateur de distribution (5) permettant de modifier une tension U1 dudit réseau électrique de première tension (1), le dispositif (3) comprenant un transformateur de réglage (7), le transformateur de réglage (7) comportant, pour au moins une des phases du réseau de première tension (1), un enroulement secondaire (11A, 11B, 11C) connecté en série au réseau de première tension (1) et un enroulement primaire (8A, 8B, 8C) dont un nombre variable de spires est connecté à un réseau électrique d'alimentation de manière à obtenir aux bornes de l'enroulement secondaire (11A, 11B, 11C) une tension ΔV1 choisie venant s'additionner à la tension U1 du réseau de première tension (1), pour régler une tension U2 dudit réseau de seconde tension (2), le transformateur de réglage (7) comportant en outre un système (12) de commande d'un organe de commutation (16), le transformateur de réglage (7) comportant en outre un circuit électrique indépendant (13), ledit circuit électrique (13) comprenant un organe de commutation (16) et, pour la ou chaque phase du transformateur de réglage (7), un enroulement tertiaire (18A, 18B, 18C) positionné à proximité immédiate de l'enroulement secondaire (11A, 11B, 11C) associé à ladite phase, l'organe de commutation (16) et le ou les enroulement(s) tertiaire(s) (18A, 18B, 18C) étant connectés en série, le circuit électrique indépendant (13) se refermant sur un élément (20) présentant une grandeur relative à une impédance, **caractérisé en ce que** le transformateur de réglage (7) comprend au moins un circuit magnétique (24) comportant une jambe de retour (28) permettant la circulation d'un flux homopolaire, et au moins un noyau (26A, 26B, 26C), le ou chaque noyau (26A, 26B, 26C) recevant un enroulement primaire (8A, 8B, 8C), un enroulement secondaire (11A, 11B, 11C) et un enroulement tertiaire (18A, 18B, 18C).

2. Dispositif (3) selon la revendication 1, **caractérisé en ce que**, le réseau électrique de première tension (1) étant polyphasé, le circuit magnétique (24) comporte une jambe de retour (28) et, pour chaque phase du transformateur de réglage (7), un noyau (26A, 26B, 26C), les enroulements primaire (8A, 8B, 8C), secondaire (11A, 11B, 11C) et tertiaire (18A, 18B, 18C) associés à ladite phase étant implantés concentriquement autour dudit noyau (26A, 26B, 26C).

3. Dispositif (3) selon la revendication 1 ou 2, **caractérisé en ce que**, le réseau électrique de première tension (1) étant polyphasé, le transformateur de réglage (7) comporte autant d'enroulements tertiaires (18A, 18B, 18C) que le réseau de première tension (1) comporte de phases.

4. Dispositif (3) selon la revendication 3 lorsqu'elle dépend de la revendication 2, **caractérisé en ce que** le circuit magnétique (24) comporte une pluralité de noyaux (26A, 26B, 26C), le nombre de noyaux (26A, 26B, 26C) étant égal au nombre de phases du réseau de première tension (1), chaque noyau (26A, 26B, 26C) recevant un enroulement primaire (8A, 8B, 8C), un enroulement secondaire (11A, 11B, 11C) et un enroulement tertiaire (18A, 18B, 18C) associés à la même phase.

5. Dispositif (3) selon la revendication 3 ou 4, **caractérisé en ce que** le réseau de première tension (1) est un réseau triphasé, le circuit magnétique (24) comprenant trois noyaux (26A, 26B, 26C) et une jambe de retour (28), et **en ce que** les trois noyaux (26A, 26B, 26C) et la jambe de retour (28) présentent des sections transversales sensiblement de mêmes dimensions.

6. Dispositif (3) selon l'une des revendications 3 à 5, **caractérisé en ce que** l'élément (20) comporte un entrefer (25) aménagé dans ladite jambe de retour (28), ledit entrefer (25) créant une reluctance du circuit magnétique (24) dont l'effet est identique à celui d'une impédance insérée dans le circuit électrique indépendant (13), la grandeur relative à une impédance étant une grandeur de valeur inversement proportionnelle à la reluctance du circuit magnétique (24) parcouru par le flux homopolaire de chaque phase.

7. Dispositif (3) selon la revendication 6, **caractérisé en ce que** l'entrefer (25) comprend une fente (30) aménagée dans ladite jambe de retour (28), la fente (30) étant comblée par un matériau isolant (32).

8. Dispositif (3) selon la revendication 1 , **caractérisé en ce qu'**il comporte autant de transformateurs de réglage (7) monophasés que le réseau de première tension (1) comporte de phases et **en ce que** le ou chaque circuit magnétique (24) comporte un noyau et une jambe de retour.

9. Dispositif (3) selon l'une des revendications 1 à 5 ou selon la revendication 8, **caractérisé en ce que** l'élément (20) comprend une résistance (22) ou une inductance, connectée en série avec le ou les enroulement(s) tertiaire(s) (18A, 18B, 18C) et avec l'organe de commutation (16), au sein du circuit électrique (13).

10. Dispositif (3) selon l'une quelconque des revendications précédentes, **caractérisé en ce que** l'enroulement primaire (8A, 8B, 8C) comprend des prises (9) aménagées sur son long de sorte que soit obtenue la variabilité du nombre de spires connectées au réseau électrique d'alimentation, les prises (9) étant connectées ou déconnectées du réseau électrique d'alimentation au moyen d'éléments de commutation (14) du dispositif de réglage (3), le système de commande (12) étant adapté, pour chaque phase du réseau électrique de première tension (1), pour actionner les éléments de commutation (14) relatifs à ladite phase indépendamment de ceux relatifs aux autres phases du réseau électrique de première tension (1).

11. Dispositif selon l'une quelconque des revendications précédentes, **caractérisé en ce que** l'organe de commutation (16) et/ou les éléments de commutation (14) présentent chacun une durée de commutation inférieure à 100 ms.

12. Dispositif selon l'une quelconque des revendications précédentes, **caractérisé en ce que** le réseau de seconde tension (2) forme le réseau électrique d'alimentation.

13. Dispositif (3) selon l'une quelconque des revendications précédentes, **caractérisé en ce que**, pour la ou chaque phase du transformateur de réglage (7), l'enroulement tertiaire (18A, 18B, 18C) associé à cette phase entoure l'enroulement primaire (8A, 8B, 8C) associé à cette phase, et l'enroulement secondaire (11A, 11B, 11C) associé à cette phase entoure les enroulements primaire (8A, 8B, 8C) et tertiaire (18A, 18B, 18C) associés à cette phase.

14. Ensemble comprenant un transformateur de distribution (5) connecté entre un réseau électrique de première tension (1) et un réseau électrique de seconde tension (2), et un dispositif (3) de réglage dynamique d'une tension U2 du réseau de seconde tension (2), le transformateur de distribution (5) étant muni d'une cuve à huile, **caractérisé en ce que** le dispositif (3) de réglage dynamique de la tension U2 est conforme à l'une quelconque des revendications précédentes, le transformateur de réglage (7) du dispositif de réglage (3) étant intégré au sein de la cuve à huile du transformateur de distribution (5), l'organe de commutation (16) et/ou les éléments de commutation (14) étant accessibles directement hors de la cuve à huile.

15. Réseau électrique de distribution comprenant un sous-réseau électrique de première tension (1) ayant un nombre de phases déterminé et un sous-réseau électrique de seconde tension (2), les sous-réseaux de première (1) et seconde tension (2) étant connectés entre eux par un transformateur de distribution (5) permettant de modifier une tension U1 dudit sous-réseau électrique de première tension (1), le réseau électrique comprenant en outre un dispositif (3) de réglage dynamique d'une tension U2 du réseau de seconde tension (2), **caractérisé en ce que** le dispositif (3) de réglage dynamique de la tension U2 est conforme à l'une quelconque des revendications 1 à 13.

**Patentansprüche**

1. Vorrichtung (3) zum dynamischen Regeln einer Spannung, die dazu bestimmt ist, elektrische Netze auszustatten, umfassend ein elektrisches Netz erster Spannung (1) mit einer bestimmten Anzahl von Phasen und ein elektrisches Netz zweiter Spannung (2), wobei die Netze erster (1) und zweiter (2) Spannung durch einen Verteilungstransformator (5) miteinander verbunden sind, der es ermöglicht, eine Spannung U1 des elektrischen Netzes erster Spannung (1) zu ändern, wobei die Vorrichtung (3) einen Regeltransformator (7) umfasst, wobei der Regeltransformator (7) für mindestens eine der Phasen des Netzes erster Spannung (1) eine Sekundärwicklung (11A, 11B, 11C) umfasst, die mit dem Netz erster Spannung (1) in Reihe geschaltet ist, und eine Primärwicklung (8A, 8B, 8C), von denen eine variable Anzahl von Windungen an ein elektrisches Versorgungsnetz angeschlossen sind, um an den Klemmen der Sekundärwicklung (11A, 11B, 11C) eine ausgewählte Spannung ΔV1 zu erhalten, die zu der Spannung U1 des Netzes erster Spannung (1) addiert wird, um eine Spannung U2 des Netzes zweiter Spannung (2) zu regeln, wobei der Regeltransformator (7) ferner ein System (12) zum Steuern eines Schaltglieds (16) umfasst, wobei der Regeltransformator (7) ferner einen unabhängigen elektrischen Kreis (13) umfasst, wobei der elektrische Kreis (13) ein Schaltglied (16) und, für die oder jede Phase des Regeltransformators (7) eine Tertiärwicklung (18A, 18B, 18C), die in unmittelbarer Nähe der der Phase zugeordneten Sekundärwicklung (11A, 11B, 11C) angeordnet ist, wobei das Schaltelement (16) und die Tertiärwicklung(en) (18A, 18B, 18C) in Reihe geschaltet sind, wobei der unabhängige elektrische Kreis (13) ein Element (20) mit einer auf eine Impedanz bezogenen Größe schließt, **dadurch gekennzeichnet, dass** der Regeltransformator (7) mindestens einen Magnetkreis (24) mit einer Rücklaufstrebe (28) umfasst, die die Zirkulation eines homopolaren Flusses ermöglicht und mindestens einen Kern (26A, 26B, 26C), wobei der oder jeder Kern (26A, 26B, 26C) eine Primärwicklung (8A, 8B, 8C), eine Sekundärwicklung (11A, 11B, 11C) und eine Tertiärwicklung (18A, 18B, 18C) aufnimmt.

2. Vorrichtung (3) nach Anspruch 1, **dadurch gekennzeichnet, dass**, wobei das elektrische Netz erster Spannung (1) mehrphasig ist, der Magnetkreis (24) eine Rücklaufstrebe (28) und für jede Phase des Regeltransformators (7) einen Kern (26A, 26B, 26C) umfasst, wobei die der Phase zugeordneten Primär- (8A, 8B, 8C), Sekundär- (11A, 11B, 11C) und Tertiärwicklungen (18A, 18B, 18C) konzentrisch um den Kern (26A, 26B, 26C) eingebaut sind.

3. Vorrichtung (3) nach Anspruch 1 oder 2, **dadurch gekennzeichnet, dass** der Regeltransformator (7), wobei das elektrische Netz erster Spannung (1) mehrphasig ist, so viele Tertiärwicklungen (18A, 18B, 18C) umfasst, wie das Netz erster Spannung (1) Phasen umfasst.

4. Vorrichtung (3) nach Anspruch 3, wenn abhängig von Anspruch 2, **dadurch gekennzeichnet, dass** der Magnetkreis (24) mehrere Kerne (26A, 26B, 26C) umfasst, wobei die Anzahl der Kerne (26A, 26B, 26C) gleich der Anzahl der Phasen des Netzes erster Spannung (1) ist und jeder Kern (26A, 26B, 26C) eine Primärwicklung (8A, 8B, 8C), eine Sekundärwicklung (11A, 11B, 11C) und eine Tertiärwicklung (18A, 18B, 18C) aufnimmt, die der gleichen Phase zugeordnet sind.

5. Vorrichtung (3) nach Anspruch 3 oder 4, **dadurch gekennzeichnet, dass** das Netz erster Spannung (1) ein Dreiphasennetz ist, wobei der Magnetkreis (24) drei Kerne (26A, 26B, 26C) und eine Rücklaufstrebe (28) umfasst, und **dadurch gekennzeichnet, dass** die drei Kerne (26A, 26B, 26C) und die Rücklaufstrebe (28) Querschnitte mit im Wesentlichen gleichen Abmessungen aufweisen.

6. Vorrichtung (3) nach einem der Ansprüche 3 bis 5, **dadurch gekennzeichnet, dass** das Element (20) einen Luftspalt (25) aufweist, der in der Rücklaufstrebe (28) angeordnet ist, wobei der Luftspalt (25) eine Reluktanz des Magnetkreises (24) erzeugt, deren Wirkung identisch mit der einer in den unabhängigen elektrischen Kreis (13) eingefügten Impedanz ist, wobei die relative Größe bezüglich einer Impedanz eine Größe mit einem Wert ist, der umgekehrt proportional zu der Reluktanz des Magnetkreises (24) ist, der von dem homopolaren Fluss jeder Phase durchlaufen wird.

7. Vorrichtung (3) nach Anspruch 6, **dadurch gekennzeichnet, dass** der Luftspalt (25) einen in der Rücklaufstrebe (28) angeordneten Schlitz (30) aufweist, wobei der Schlitz (30) mit einem Isoliermaterial (32) gefüllt ist.

8. Vorrichtung (3) nach Anspruch 1, **dadurch gekennzeichnet, dass** sie so viele einphasige Regeltransformatoren (7) umfasst, wie das Netz erster Spannung (1) Phasen umfasst, und dass der oder jeder Magnetkreis (24) einen Kern und eine Rücklaufstrebe umfasst.

9. Vorrichtung (3) nach einem der Ansprüche 1 bis 5 oder nach Anspruch 8, **dadurch gekennzeichnet, dass** das Element (20) einen Widerstand (22) oder eine Induktivität umfasst, der/die mit der/den Tertiärwicklung(en) (18A, 18B, 18C) und mit dem Schaltglied (16) innerhalb des elektrischen Kreises (13) in Reihe geschaltet ist.

10. Vorrichtung (3) nach einem der vorhergehenden Ansprüche, **dadurch gekennzeichnet, dass** die Primärwicklung (8A, 8B, 8C) Anzapfungen (9) umfasst, die entlang ihrer Länge angeordnet sind, um die Variabilität der Anzahl der mit dem elektrischen Versorgungsnetz verbundenen Windungen zu erhalten, wobei die Anzapfungen (9) mittels Schaltelementen (14) der Regelvorrichtung (3) mit dem elektrischen Versorgungsnetz verbunden oder von diesem getrennt werden, wobei das Steuersystem (12) für jede Phase des elektrischen Netzes erster Spannung (1) angepasst ist, um die Schaltelemente (14), die sich auf diese Phase beziehen, unabhängig von denen zu betätigen, die sich auf die anderen Phasen des elektrischen Netzes erster Spannung (1) beziehen.

11. Vorrichtung nach einem der vorhergehenden Ansprüche, **dadurch gekennzeichnet, dass** das Schaltglied (16) und/oder die Schaltelemente (14) jeweils eine Schaltzeit von weniger als 100 ms aufweisen.

12. Vorrichtung nach einem der vorhergehenden Ansprüche, **dadurch gekennzeichnet, dass** das Netz zweiter Spannung (2) das elektrische Versorgungsnetz bildet.

13. Vorrichtung (3) nach einem der vorhergehenden Ansprüche, **dadurch gekennzeichnet, dass** für die oder jede Phase des Regeltransformators (7) die dieser Phase zugeordnete Tertiärwicklung (18A, 18B, 18C) die Primärwicklung (8A, 8B, 8C) umgibt, die dieser Phase zugeordnet sind, und die Sekundärwicklung (11A, 11B, 11C), die dieser Phase zugeordnet ist, die Primärwicklung (8A, 8B, 8C) und Tertiärwicklung (18A, 18B, 18C) umgibt, die dieser Phase zugeordnet sind.

14. Anordnung, umfassend einen Verteilungstransformator (5), der zwischen einem elektrischen Netz erster Spannung (1) und einem elektrischen Netz zweiter Spannung (2) geschaltet ist, und eine Vorrichtung (3) zum dynamischen Regeln einer Spannung U2 des Netzes zweiter Spannung (2), wobei der Verteilungstransformator (5) mit einem Öltank versehen ist, **dadurch gekennzeichnet, dass** die Vorrichtung (3) zur dynamischen Regelung der Spannung U2 nach einem der vorhergehenden Ansprüche ausgebildet ist, wobei der Regeltransformator (7) der Regelvorrichtung (3) innerhalb des Öltanks des Verteilungstransformators (5) integriert ist, wobei das Schaltglied (16) und/oder die Schaltelemente (14) direkt von außerhalb des Öltanks zugänglich sind.

15. Elektrisches Verteilungsnetz, umfassend ein elektrisches Teilnetz erster Spannung (1) mit einer bestimmten Anzahl von Phasen und ein elektrisches Teilnetz zweiter Spannung (2), wobei das Teilnetz erster Spannung (1) und das Teilnetz zweiter Spannung (2) durch einen Verteilungstransformator (5) miteinander verbunden sind, der es ermöglicht, eine Spannung U1 des elektrischen Teilnetzes erster Spannung (1) zu verändern, wobei das elektrische Netz ferner eine Vorrichtung (3) zum dynamischen Regeln einer Spannung U2 des Netzes zweiter Spannung (2) umfasst, **dadurch gekennzeichnet, dass** die Vorrichtung (3) zum dynamischen Regeln der Spannung U2 nach einem der Ansprüche 1 bis 13 ausgebildet ist.

**Claims**

1. Device (3) for dynamically adjusting voltage, intended to be provided to electrical networks comprising an electrical network of first voltage (1) having a predetermined number of phases and an electrical network of second voltage (2), the network of first voltage (1) and the network of second voltage (2) being interconnected by a distribution transformer (5) for modifying a voltage U1 of said electrical network of first voltage (1), the device (3) comprising an adjustment transformer (7), the adjustment transformer (7) comprising, for at least one of the phases of the network of first voltage (1), a secondary winding (11A, 11B, 11C) connected in series with the network of first voltage (1) and a primary winding (8A, 8B, 8C) of which a variable number of turns are connected to an electrical supply network so as to obtain, at the terminals of the secondary winding (11A, 11B, 11C), a chosen voltage ΔV1 which is added to the voltage U1 of the network of first voltage (1) in order to adjust a voltage U2 of said network of second voltage (2), the adjustment transformer (7) further comprising a system (12) for controlling a switching member (16), the adjustment transformer (7) further comprising an independent electrical circuit (13), said electrical circuit (13) comprising a switching member (16) and, for the or each phase of the adjustment transformer (7), a tertiary winding (18A, 18B, 18C) positioned in the immediate vicinity of the secondary winding (11A, 11B, 11C) associated with said phase, the switching member (16) and the tertiary winding(s) (18A, 18B, 18C) being connected in series, the independent electrical circuit (13) closing on an element (20) having a magnitude relating to an impedance, **characterized in that** the adjustment transformer (7) comprises at least one magnetic circuit (24) having a return leg (28) which allows a homopolar flux to flow and at least one core (26A, 26B, 26C), the or each core (26A, 26B, 26C) accommodating a primary winding (8A, 8B, 8C), a secondary winding (11A, 11B, 11C), and a tertiary winding (18A, 18B, 18C).

2. Device (3) according to claim 1, **characterized in that**, the electrical network of first voltage (1) being polyphase, the magnetic circuit (24) comprises a return leg (28) and, for each phase of the adjustment transformer (7), a core (26A, 26B, 26C), the primary (8A, 8B, 8C), secondary (11A, 11B, 11C), and tertiary (18A, 18B, 18C) windings associated with said phase being mounted concentrically around said core (26A, 26B, 26C).

3. Device (3) according to either claim 1 or claim 2, **characterized in that**, the electrical network of first voltage (1) being polyphase, the adjustment transformer (7) has as many tertiary windings (18A, 18B, 18C) as the network of first voltage (1) has phases.

4. Device (3) according to claim 3 when dependent on claim 2, **characterized in that** the magnetic circuit (24) comprises a plurality of cores (26A, 26B, 26C), the number of cores (26A, 26B, 26C)) being equal to the number of phases of the network of first voltage (1), each core (26A, 26B, 26C) accommodating a primary winding (8A, 8B, 8C), a secondary winding (11A, 11B, 11C), and a tertiary winding (18A, 18B, 18C) associated with the same phase.

5. Device (3) according to either claim 3 or claim 4, **characterized in that** the network of first voltage (1) is a three-phase network, the magnetic circuit (24) comprising three cores (26A, 26B, 26C) and a return leg (28), and **in that** the three cores (26A, 26B, 26C) and the return leg (28) have cross sections of substantially the same dimensions.

6. Device (3) according to any of claims 3 to 5, **characterized in that** the element (20) comprises an air gap (25) arranged in said return leg (28), said air gap (25) creating a reluctance in the magnetic circuit (24) of which the effect is identical to that of an impedance inserted into the independent electrical circuit (13), the magnitude relating to an impedance being a magnitude of a value that is inversely proportional to the reluctance of the magnetic circuit (24) through which the homopolar flux of each phase flows.

7. Device (3) according to claim 6, **characterized in that** the air gap (25) comprises a slit (30) provided in said return leg (28), the slit (30) being filled with an insulating material (32).

8. Device (3) according to claim 1, **characterized in that** it has as many single-phase adjustment transformers (7) as the network of first voltage (1) has phases, and **in that** the or each magnetic circuit (24) comprises a core and a return leg.

9. Device (3) according to any of claims 1 to 5 or according to claim 8, **characterized in that** the element (20) comprises a resistor (22) or an inductor connected in series with the tertiary winding(s) (18A, 18B, 18C) and with the switching member (16) within the electrical circuit (13).

10. Device (3) according to any of the preceding claims, **characterized in that** the primary winding (8A, 8B, 8C) comprises taps (9) arranged along the length thereof in such a way that the number of turns connected to the electrical supply network can be varied, the taps (9) being connected to or disconnected from the electrical supply network by means of switching elements (14) of the adjustment device (3), the control system (12) being suitable to, for each phase of the electrical network of first voltage (1), actuate the switching elements (14) relating to said phase independently of those relating to the other phases of the electrical network of first voltage (1).

11. Device according to any of the preceding claims, **characterized in that** the switching member (16) and/or the switching elements (14) each have a switching duration of less than 100 ms.

12. Device according to any of the preceding claims, **characterized in that** the network of second voltage (2) forms the electrical supply network.

13. Device (3) according to any of the preceding claims, **characterized in that**, for the or each phase of the adjustment transformer (7), the tertiary winding (18A, 18B, 18C) associated with this phase surrounds the primary winding (8A, 8B, 8C) associated with this phase, and the secondary winding (11A, 11B, 11C) associated with this phase surrounds the primary (8A, 8B, 8C) and tertiary windings (18A, 18B, 18C) associated with this phase.

14. Assembly comprising a distribution transformer (5) connected between an electrical network of first voltage (1) and an electrical network of second voltage (2), and a device (3) for dynamically adjusting a voltage U2 of the network of second voltage (2), the distribution transformer (5) being provided with an oil tank, **characterized in that** the device (3) for dynamically adjusting the voltage U2 corresponds to any of the preceding claims, the adjustment transformer (7) of the adjustment device (3) being integrated within the oil tank of the distribution transformer (5), the switching member (16) and/or the switching elements (14) being accessible directly outside of the oil tank.

15. Electrical distribution network comprising an electrical sub-network of first voltage (1) having a predetermined number of phases and an electrical sub-network of second voltage (2), the sub-network of first voltage (1) and the sub-network of second voltage (2) being interconnected by a distribution transformer (5) for modifying a voltage U1 of said electrical sub-network of first voltage (1), the electrical network further comprising a device (3) for dynamically adjusting a voltage U2 of the network of second voltage (2), **characterized in that** the device (3) for dynamically adjusting the voltage U2 corresponds to any of claims 1 to 13.

Fig. 1

Fig. 2

EP 3 251 190 B1

Fig. 3

Fig. 4

Fig. 5

EP 3 251 190 B1

Fig. 6

21

## RÉFÉRENCES CITÉES DANS LA DESCRIPTION

**Documents brevets cités dans la description**

- FR 3004284
- CN 101615806 B
- FR 2994039 A1